# EUROPÄISCHE PATENTSCHRIFT

(11) **EP 3 184 709 B1**
(45) Veröffentlichungstag und Bekanntmachung des Hinweises auf die Patenterteilung: **06.11.2019**
(21) Anmeldenummer: 16199492.6
(22) Anmeldetag: 13.09.2012
(51) Int. Cl.: E04B 1/76, E04B 1/94, C08J 9/00, C08J 9/224, C08J 9/236

(54) **VERFAHREN ZUR HERSTELLUNG EINES FLAMMGESCHÜTZTEN DÄMMELEMENTES, DÄMMELEMENT SOWIE VERWENDUNG EINES DÄMMELEMENTES**
METHOD FOR PRODUCING A FLAME RETARDANT INSULATING ELEMENT, INSULATING ELEMENT AND USE OF AN INSULATING ELEMENT
PROCÉDÉ DE FABRICATION D'UN ÉLÉMENT ISOLANT IGNIFUGÉ, ÉLÉMENT ISOLANT ET UTILISATION D'UN ÉLÉMENT ISOLANT

(43) Veröffentlichungstag der Anmeldung: 28.06.2017
(62) Teilanmeldung aus: 12184179.5
(73) Patentinhaber: STO SE & Co. KGaA, 79780 Stühlingen (DE)
(72) Erfinder: Hitzler, Martin, 78244 Gottmadingen (DE); Kohler, Eva, 79777 Ühlingen-Birkendorf (DE); Leingruber, Silke, 78176 Blumberg (DE); Weier, Andreas, 78647 Trossingen (DE); Isele, Robert, 79777 Berau (DE)
(74) Vertreter: Gottschalk, Matthias

(56) Entgegenhaltungen:
- EP-A1- 0 994 145
- EP-A2- 0 113 511
- WO-A1-2008/145599
- DE-A1-102008 038 916
- US-A1- 2010 204 350

## Beschreibung

Die Erfindung betrifft ein Verfahren zur Herstellung eines flammgeschützten Dämmelementes mit den Merkmalen des Oberbegriffs des Anspruchs 1. Ferner betrifft die Erfindung ein Dämmelement sowie eine Verwendung eines nach einem erfindungsgemäßen Verfahren hergestellten Dämmelementes.

### Stand der Technik

Bei der Schall- und/oder Wärmedämmung von Gebäudewänden oder -decken finden häufig Hartschaumplatten, insbesondere Polystyrol-Hartschaumplatten, als Dämmelemente Einsatz. Diese weisen zum einen gute Wärmedämmeigenschaften auf und sind zum anderen relativ kostengünstig herstellbar. Zudem sind sie auf der Baustelle einfach zu handhaben, da sie formstabil und wasserunempfindlich sind. Als nachteilig erweist sich jedoch in der Regel das Brandverhalten von Dämmelementen aus einem Hartschaum, welche daher regelmäßig der Baustoffklasse B (brennbare Baustoffe) gemäß DIN 4102-1 zuzuordnen sind.

Aus der WO 2008/145599 A1 ist ein feuerhemmender Polystyrol-Schaumstoff bekannt, welcher zum einen ein verbessertes Brandverhalten aufweisen und zum anderen keine Verschlechterung seiner ursprünglichen Eigenschaften aufweisen soll. Insbesondere soll der Polystyrol-Schaumstoff weiterhin eine geringe Wasserdurchlässigkeit, eine hohe Wasserbeständigkeit, sehr guter Wärmedämm- und Schallschutzeigenschaften sowie eine hohe mechanische Festigkeit bei gleichzeitig geringem Gewicht bzw. geringer Dichte aufweisen. Darüber hinaus soll die Herstellbarkeit des Polystyrol-Schaumstoffs auf den herkömmlichen Anlagen gewährleistet sein, so dass er weiterhin kostengünstig herstellbar ist. Gemäß der Druckschrift werden diese Ziele durch eine Zusammensetzung erreicht, welche expandierte oder expandierbare Polystyrol-Partikel, einen intumeszenten Stoff und einen feuerbeständigen Binder umfasst. Der Anteil der Polystyrol-Partikel beträgt dabei 20-75 Gew.-% bezogen auf das Gesamtgewicht der Zusammensetzung bestehend aus Polystyrol-Partikel, intumeszenter Stoff und Binder. Das heißt, dass der Polystyrol-Partikelanteil unter Umständen deutlich reduziert ist. Dies muss zwangsläufig eine Veränderung der Wärmedämmeigenschaften eines hieraus hergestellten Dämmelementes zur Folge haben, wenn die fehlenden Polystyrol-Partikel nicht durch gleichwertige Dämmstoffe ersetzt werden. Um zudem weiterhin die mechanische Stabilität des Schaumstoffformkörpers zu gewährleisten, muss der Bindemittelanteil erhöht werden. Der hohe Bindemittelanteil wiederum macht den Einsatz eines nicht brennbaren Bindemittels erforderlich. Es ist jedoch allgemein bekannt, dass die Bindekraft nicht brennbarer, in der Regel anorganischer Bindemittel im Vergleich zu organischen Bindemitteln herabgesetzt ist, so dass eher eine Entmischung der Ausgangsstoffe in der Form zu erwarten ist, welche die Qualität des derart hergestellten Schaumstoffformkörpers beeinträchtigt.

EP 0 113 511 A2 beschreibt ein zum Stand der Technik gehörendes Verfahren zur Herstellung eines feuerhemmenden Polystyrol-Schaumstoffes.

Ausgehend von dem vorstehend genannten Stand der Technik liegt der vorliegenden Erfindung die Aufgabe zugrunde, ein Verfahren zur Herstellung eines flammgeschützten, Polystyrol-Partikel enthaltenden Dämmelementes anzugeben, das einerseits ein gegenüber herkömmlichen Polystyrol-Hartschaumplatten aus Brandschutzsicht verbessertes Brandschutzverhalten sowie andererseits hervorragende Wärmedämmeigenschaften aufweist. Zugleich soll ein Dämmelement mit einer hohen mechanischen Stabilität geschaffen werden.

Zur Lösung der Aufgaben wird ein Verfahren mit den Merkmalen des Anspruchs 1 vorgeschlagen. Vorteilhafte Weiterbildungen des erfindungsgemäßen Verfahrens sind in den auf Anspruch 1 rückbezogenen Unteransprüchen angegeben. Ferner werden ein Dämmelement gemäß Anspruch 11 sowie eine Verwendung gemäß Anspruch 12 eines nach einem erfindungsgemäßen Verfahren hergestellten Dämmelementes vorgeschlagen.

### Offenbarung der Erfindung

Bei dem zur Herstellung eines flammgeschützten Dämmelementes vorgeschlagenen Verfahren werden vorgeschäumte Polystyrol-Partikel verwendet, von denen zumindest ein Teil vor dem Einfüllen in eine Form und dem Versintern beschichtet werden. Erfindungsgemäß ist vorgesehen, dass die vorgeschäumten Polystyrol-Partikel zumindest teilweise mit einer Acrylat, Styrolacrylat, Vinylacetat, Vinylacetat-Ethylen und/oder Vinylchlorid enthaltenden Formulierung als organischem Bindemittel und mit wenigstens einem Flammschutzmittel beschichtet werden. Zumindest "teilweise" kann in diesem Zusammenhang bedeuten, dass ein Teil der verwendeten Polystyrol-Partikel unbeschichtet bleibt und/oder die Beschichtung lediglich partiell auf zumindest einen Teil der vorgeschäumten Polystyrol-Partikel aufgebracht wird. D.h., dass zumindest ein Teil der Polystyrol-Partikel nicht vollständig von der aufgebrachten Beschichtung umhüllt sein muss und demnach unbeschichtete Oberflächenbereiche aufweisen kann. Der Anteil unbeschichteter und/oder lediglich teilweise beschichteter Polystyrol-Partikel fördert einen Verbund der Partikel untereinander, indem diese - wie bei der Herstellung herkömmlichen Polystyrol-Hartschaums - während des Versinterns miteinander verschmelzen. Dadurch bleibt eine hohe mechanische Stabilität des derart hergestellten Formkörpers erhalten. Ferner wird auf diese Weise der Bindemittelanteil reduziert. Der geringe Bindemittelanteil ermöglicht die Verwendung eines organischen Bindemittels, das gegenüber anorganischen Bindemitteln zwar brennbar ist, dafür aber eine erhöhte Bindekraft besitzt. Dies wirkt sich insbesondere positiv auf die Bindung des Flammschutzmittels an den Polystyrol-Partikeln aus.

Zwar kann grundsätzlich auch über eine aushärtende Bindemittelmatrix ein Verbund der Polystyrol-Partikel untereinander erzielt werden, sofern das Bindemittel jedoch ferner Flammschutzmittel in Form von Feststoffen enthält, können diese zu einer deutlichen Absenkung der Stabilität des Verbundes führen. Insofern erweist sich ein Verschweißen bzw. Versintern der Polystyrol-Partikel im Hinblick auf die mechanische Festigkeit des nach einem erfindungsgemäßen Verfahren hergestellten Dämmelementes als vorteilhaft.

Bevorzugt wird ein Flammschutzmittel zum Beschichten der vorgeschäumten Polystyrol-Partikel verwendet, das im Brandfall eine ablative oder intumeszierende Schutzschicht bildet. Unter einer ablativen Schutzschicht wird vorliegend eine nicht brennbare Schutzschicht verstanden, die "passiv" Feuerwiderstand leistet. Unter einer intumeszierenden Schutzschicht wird eine Schutzschicht verstanden, die erst im Brandfall durch Aufschäumen eine isolierende Schutzschicht ausbildet und demnach "aktiv" Feuerwiderstand leistet. Darüber hinaus können Wasser freisetzende "kühlende" Flammschutzmittel eingesetzt werden, beispielsweise Metallhydroxide, Alkalimetallsilikate sowie Hydrate von Metallsalzen oder -oxiden, die bei erhöhten Temperaturen chemisch oder physikalisch gebundenes Wasser abgeben. Entsprechende Flammschutzmittel sind hinlänglich bekannt und werden von verschiedenen Herstellern angeboten.

Alternativ oder ergänzend wird vorgeschlagen, dass Blähgraphit als Flammschutzmittel verwendet wird. Die flammwidrige Ausstattung der Beschichtung wird durch die Einbindung von Blähgraphit deutlich verbessert. Der Begriff "Blähgraphit" bezeichnet eine synthetisch hergestellte Produktgruppe aus natürlichem Graphit und blähbaren S- und/oder N-Verbindungen, die in die Schichtstruktur des Graphits eingelagert werden. Letztere expandieren unter Einfluss von Hitze, so dass eine aktive Brandbarriere aufgebaut wird. Die Blährate kann dabei bis um das Mehrhundertfache des ursprünglichen Volumens des Blähgraphits betragen.

Erfindungsgemäß werden das Bindemittel und das Flammschutzmittel zeitlich versetzt auf die vorgeschäumten Polystyrol-Partikel aufgebracht. Dabei erfolgt die Beschichtung mit Flammschutzmittel vorzugsweise nach der Beschichtung mit Bindemittel. Die Beschichtung bzw. Beschichtungen kann bzw. können mittels Sprühen, Spritzen, Tauchen und/oder Mischen aufgebracht werden. Beim Sprühen oder Spritzen wird bzw. werden das Bindemittel und/oder das Flammschutzmittel aktiv auf die vorgeschäumten Polystyrol-Partikel aufgebracht, wobei in einfacher Weise Teilbereiche der Partikeloberflächen unbeschichtet belassen bleiben können. Beim Tauchen oder Mischen erfolgt in der Regel eine vollständige Umhüllung der Polystyrol-Partikel mit Bindemittel und/oder Flammschutzmittel. Welches Beschichtungsverfahren eingesetzt wird, hängt demnach insbesondere davon ab, ob die Oberflächen der Polystyrol-Partikel vollständig oder nur teilweise beschichtet werden.

Vorteilhafterweise werden die vorgeschäumten und zumindest mit Bindemittel beschichteten Polystyrol-Partikel vor dem vollständigen Trocknen der Beschichtung mit einem Flammschutzmittel beschichtet. D.h., dass die Aufbringung des Flammschutzmittels in einem nachfolgenden, separaten Arbeitsschritt erfolgt, solange die zuvor aufgebrachte Bindemittelbeschichtung noch "feucht" ist bzw. nicht vollständig durchgetrocknet ist. Dadurch wird eine sehr gute Haftung des Flammschutzmittels an den Polystyrol-Partikeln erzielt.

Darüber hinaus wird vorgeschlagen, dass die vorgeschäumten und mit Bindemittel und Flammschutzmittel beschichteten Polystyrol-Partikel vor dem vollständigen Trocknen der Beschichtung in eine Form eingegeben und versintert werden. D.h., dass die vorgeschäumten und beschichteten Polystyrol-Partikel vorzugsweise "feucht" in die Form eingegeben werden. Dies hat den Vorteil, dass einer Entmischung der Stoffe in der Form entgegen gewirkt wird.

Gemäß einer bevorzugten Ausführungsform der Erfindung werden den beschichteten vorgeschäumten Polystyrol-Partikeln vor dem Eingeben in eine Form unbeschichtete vorgeschäumte Polystyrol-Partikel beigemischt. Die Beimischung unbeschichteter vorgeschäumter Polystyrol-Partikel - wie auch die Beimischung oder ausschließliche Verwendung lediglich partiell beschichteter vorgeschäumter Polystyrol-Partikel - fördert ein Verschmelzen der Polystyrol-Partikel miteinander. Wie bereits erwähnt, bewirkt das Verschmelzen bzw. Versintern einen stabilen Verbund der Polystyrol-Partikel untereinander, so dass ein derart hergestelltes Dämmelement eine hohe mechanische Festigkeit aufweist. Vorteilhafterweise beträgt der Anteil der unbeschichteten vorgeschäumten Polystyrol-Partikel 0 bis 95 Vol.-%, vorzugsweise 25 bis 90 Vol.-% und besonders bevorzugt 50 bis 88 Vol.-% bezogen auf das Gesamtvolumen der vorgeschäumten Polystyrol-Partikel.

Die Beimischung unbeschichteter vorgeschäumter Polystyrol-Partikel bewirkt ferner, dass der Gewichtsanteil der Polystyrol-Partikel in Bezug auf die Ausgangsstoffe erhöht wird. Ein nach diesem Verfahren hergestellter Polystyrol-Partikelschaum weist demnach sehr gute Wärmedämmeigenschaften vergleichbar denen herkömmlicher Polystyrol-Schaumstoffe auf. Im Unterschied zu diesen besitzt der nach einem erfindungsgemäßen Verfahren hergestellte Polystyrol-Partikelschaum jedoch eine erhöhte Brandbeständigkeit. Die erhöhte Brandbeständigkeit wird selbst dann erreicht, wenn ein organisches, d.h. brennbares Bindemittel zum Beschichten der Polystyrol-Partikel verwendet wird. Denn der Bindemittelanteil wird vorliegend so gering wie möglich gehalten.

Anhand von Versuchen an Probekörpern wurde überraschenderweise festgestellt, dass eine erhöhte Zugabe von Bindemitteln und/oder Flammschutzmitteln nicht zwangsläufig auch zu einer erhöhten Brandbeständigkeit des Dämmelementes führt. Insbesondere mit zunehmender Menge an Bindemittel - unabhängig davon, ob brennbar oder nicht brennbar - besteht die Gefahr, dass die Brandbeständigkeit abnimmt. Dies liegt darin begründet, dass das Bindemittel Stege zwischen den Polystyrol-Partikeln ausbildet, welche im Brandfall gleichsam als "Docht" wirken, entlang dessen sich ein Feuer ausbreiten kann. Derartige Bindemittelstege unterstützen demnach die Brandausbreitung. Insofern gilt es, die Ausbildung solcher Bindemittelstege zu verhindern, was insbesondere dann gelingt, wenn der Bindemittelanteil möglichst gering gehalten wird.

Gemäß einer bevorzugten Ausführungsform der Erfindung werden 30 bis 95 Gew.-% Polystyrol-Partikel, 2,5 bis 67,5 Gew.-% Bindemittel und 2,5 bis 67,5 Gew.-% Flammschutzmittel, vorzugsweise 40 bis 90 Gew.-% Polystyrol-Partikel, 5 bis 55 Gew.-% Bindemittel und 5 bis 55 Gew.-% Flammschutzmittel, weiterhin vorzugsweise 50 bis 85 Gew.-% Polystyrol-Partikel, 7,5 bis 35 Gew.-% Bindemittel und 7,5 bis 35 Gew.-% Flammschutzmittel, bezogen auf das Trockengesamtgewicht der Ausgangsstoffe verwendet. Die Vorteile eines geringen Bindemittelanteils sind bereits vorstehend eingehend beschrieben worden, so dass zwecks Vermeidung von Wiederholungen hierauf verwiesen wird. Um einen Dämmstoff mit hervorragenden Wärmedämmeigenschaften zu erhalten, liegt der Gewichtsanteil der Polystyrol-Partikel besonders bevorzugt bei mindestens 76 Gew.-% bezogen auf das Trockengesamtgewicht der Ausgangsstoffe.

Gemäß einer weiteren bevorzugten Ausführungsform der Erfindung beträgt das Gewichtsverhältnis der vorgeschäumten Polystyrol-Partikel zum Flammschutzmittel bezogen auf das jeweilige Trockengewicht 0,4 bis 38, vorzugsweise 0,75 bis 34, weiterhin vorzugsweise 1,05 bis 20. Versuche mit entsprechend hergestellten Dämmelementen haben gezeigt, dass diese eine erhöhte Brandbeständigkeit bzw. verringerte Entzündungsneigung aufweisen.

Gemäß einer Weiterbildung der Erfindung werden schäumbare und/oder vorgeschäumte thermoplastische Partikel bestehend aus Polyethylen oder Polypropylen oder Copolymeren aus einem oder beiden vorgenannten Stoffen mit Polystyrol vor dem Versintern zumindest teilweise mit zumindest einem Bindemittel und mit wenigstens einem Flammschutzmittel beschichtet.

In einer bevorzugten Ausführung der Erfindung werden vor dem vollständigen Trocknen der Beschichtung die beschichteten und/oder unbeschichteten thermoplastischen Partikel vor dem Versintern mit beschichteten und/oder unbeschichteten Polystyrol-Partikeln in eine Form eingegeben und geschäumt.

Die Veränderung des Anteils der den thermoplastischen Partikeln beigemischten Polystyrol-Partikeln führt beispielsweise zu einer Verbesserung der schall- und wärmedämmenden Eigenschaften der nach diesem Verfahren hergestellten Dämmelemente.

Gemäß einer Weiterbildung der Erfindung werden den vorgeschäumten, beschichteten und/oder unbeschichteten Polystyrol-Partikeln vor dem Eingeben in die Form Fasern, Füllstoffe und/oder Additive zugegeben. Durch die Zugabe von Fasern, Füllstoffen und/oder Additiven können die stoffspezifischen Eigenschaften des Dämmelementes beeinflusst werden. So kann beispielsweise durch die Zugabe von Fasern die mechanische Festigkeit des Dämmelementes erhöht werden.

Das vorstehend beschriebene erfindungsgemäße Verfahren weist einen weiteren Vorteil auf, der darin besteht, dass die bislang zur Herstellung von Dämmelementen aus Polystyrol-Hartschaum eingesetzten Anlagen weiterhin eingesetzt werden können. D.h., dass keine neue Anlagentechnik erforderlich ist, so dass das Verfahren relativ kostengünstig durchführbar ist. Insbesondere können die zur Durchführung des bekannten Blockschäumverfahrens verwendeten Anlagen sowie die bekannten Formteilautomaten eingesetzt werden.

Vorteilhafterweise werden die Ausgangsstoffe in der Form unter Zugabe von Druck und/oder Wärme versintert. Der Druck bewirkt eine Verdichtung der Polystyrol-Partikel, wobei diese sich verformen und an die benachbarten Polystyrol-Partikel derart anschmiegen, dass zwischen den Polystyrol-Partikeln lediglich ein isoliertes Zwickelvolumen verbleibt. Alternativ oder ergänzend kann dieser Effekt durch die Zugabe von Wärme bewirkt werden, welche zu einer Ausdehnung der Partikel innerhalb der Form führt. Da das Volumen der Form jedoch begrenzt ist, werden die Partikel gegeneinander gedrückt.

Vorgeschlagen wird ferner ein Dämmelement, das nach einem erfindungsgemäßen Verfahren hergestellt worden, wasserundurchlässig und wasserdampfdiffusionsoffen ist. Ein solches Dämmelement nimmt kein Wasser auf, behindert aber die Wasserdampfdiffusion nicht. Es ist demnach insbesondere im Außenbereich oder in feuchtigkeitsbelasteten Innenräumen als Schall- und/oder Wärmedämmelement einsetzbar. Die Wasserundurchlässigkeit des Dämmelementes ist bevorzugt Folge des Versinterns unter Zugabe von Druck und/oder Wärme, bei welchem die zwischen den Partikeln verbleibenden Zwickelräume voneinander isoliert werden.

Schließlich wird die Verwendung eines nach einem erfindungsgemäßen Verfahren hergestellten Dämmelementes zur Schall- und/oder Wärmedämmung einer Gebäudewand oder -decke vorgeschlagen. Hierin ist die bevorzugte Verwendung eines solchen Dämmelementes zu sehen, da hierbei die besonderen Eigenschaften, insbesondere die erhöhte Brandbeständigkeit unter Beibehaltung der sehr guten Wärmedämmeigenschaften, besonders gut zum Tragen kommen. Ferner wird den hohen Brandschutzanforderungen im Baubereich Rechnung getragen.

Das erfindungsgemäße Verfahren sowie ein hiernach hergestelltes Dämmelement werden nachfolgend anhand von Beispielen näher erläutert.

### Beispiel 1

Es wurden 200 g vorgeschäumte Polystyrol-Partikel (Korngröße 3 bis 8 mm, Schüttdichte 0,015 bis 0,16 g/cm³) mit 400 g einer wässrigen, organischen Dispersionsbrandschutzfarbe (KBS Foamcoat, Fa. BASF) beschichtet, indem die Polystyrol-Partikel und die Brandschutzfarbe unter Zusatz von 200 g Wasser innig vermischt wurden. Anschließend - vor dem Trocknen der wässrigen Brandschutzfarbe - wurden 600 g Blähgraphit zugeben und innig vermischt.

20 Vol.-% dieser Mischung wurden anschließend- vor dem Trocknen der wässrigen Brandschutzfarbe - mit 80 Vol.-% unbeschichteter vorgeschäumter Polystyrol-Partikel homogen vermischt und sodann in eine Form der Abmessungen 30 cm x 30 cm x 10 cm eingegeben und unter Zugabe von Druck (1 bar) und Wärme (100°C), wobei Wasserdampf als Heizmedium diente, der die Form 10 bis 15 Sekunden lang von oben nach unten flächig durchströmte, verblockt. Nach dem Druckabbau wurde das Formteil aus der Form genommen und über einen Zeitraum von einer Woche bei Raumtemperatur getrocknet.

Das derart hergestellte Formteil wies eine Wärmeleitfähigkeit λ nach DIN EN 12667 von 0,037 W/(mK) und eine Dichte ρ nach DIN EN 1602 von 28,6 kg/m³ auf. Ferner wurde das Brandverhalten des Formteils getestet, wobei das Formteil zur Beurteilung der Brennbarkeit und des Brandverhaltens einer rauschenden Bunsenbrennerflamme ausgesetzt wurde. Das Testverfahren zeigte kein thermoplastisches Fließen der Schmelze. Ein brennendes Abtropfen fand nicht statt. Ferner konnte ein selbstständiges Weiterbrennen des Prüfkörpers nach Entfernen der Flamme vollständig unterbunden werden.

### Beispiel 2

Es wurden 200 g vorgeschäumte Polystyrol-Partikel (Korngröße 3 bis 8 mm, Schüttdichte 0,015 bis 0,16 g/cm³) mit 400 g einer wässrigen Polymerdispersion (Styrol-Acrylat Bindemittel, mit einem Feststoffgehalt von 50 Gew.-%) beschichtet, indem die Polystyrol-Partikel und die Polymerdispersion innig vermischt wurden. Anschließend - vor dem Trocknen der wässrigen Polymerdispersion - wurden 600 g Blähgraphit zugeben und innig vermischt.

10 Vol.-% dieser Mischung wurden anschließend- vor dem Trocknen der wässrigen Polymerdispersion - mit 90 Vol.-% unbeschichteter vorgeschäumter Polystyrol-Partikel homogen vermischt und sodann in eine Form der Abmessungen 30 cm x 30 cm x 10 cm eingegeben und unter Zugabe von Druck (1 bar) und Wärme (100°C), wobei Wasserdampf als Heizmedium diente, der die Form 10 bis 15 Sekunden lang von oben nach unten flächig durchströmte, verblockt. Nach dem Druckabbau wurde das Formteil aus der Form genommen und über einen Zeitraum von einer Woche bei Raumtemperatur getrocknet.

Das derart hergestellte Formteil wies eine Wärmeleitfähigkeit λ nach DIN EN 12667 von 0,032 W/(mK) und eine Dichte ρ nach DIN EN 1602 von 20,2 kg/m³ auf. Ferner wurde das Brandverhalten des Formteils getestet, wobei das Formteil zur Beurteilung der Brennbarkeit und des Brandverhaltens einer rauschenden Bunsenbrennerflamme ausgesetzt wurde. Das Testverfahren zeigte ein deutlich vermindertes thermoplastisches Fließen der heißen Schmelze. Die Bildung eines Polymersees war lokal begrenzt. Das brennende Abtropfen und das selbstständige Weiterbrennen der Schmelze waren stark vermindert.

### Referenzbeispiel

Es wurden 9 Liter vorgeschäumte Polystyrol-Partikel (Korngröße 3 bis 8 mm, Schüttdichte 0,015 bis 0,16 g/cm³) in eine Form der Abmessungen 30 cm x 30 cm x 10 cm eingegeben und unter Zugabe von Druck (1 bar) und Wärme (100°C), wobei Wasserdampf als Heizmedium diente, der die Form 10 bis 15 Sekunden lang von oben nach unten flächig durchströmte, verblockt. Nach dem Druckabbau wurde das Formteil aus der Form genommen und über einen Zeitraum von einer Woche bei Raumtemperatur getrocknet.

Das derart hergestellte Formteil wies eine Wärmeleitfähigkeit λ nach DIN EN 12667 von 0,0297 W/(mK) und eine Dichte ρ nach DIN EN 1602 von 15,8 kg/m³ auf. Ferner wurde das Brandverhalten des Formteils getestet, wobei das Formteil zur Beurteilung der Brennbarkeit und des Brandverhaltens einer rauschenden Bunsenbrennerflamme ausgesetzt wurde. Das Testverfahren zeigte ein sofortiges thermoplastisches Schmelzen mit brennendem Abtropfen, was die Bildung eines brennenden Polymersees zur Folge hatte.

Ein nach einem erfindungsgemäßen Verfahren hergestelltes Dämmelement (Beispiele 1 bis 2) weist demnach gegenüber einem herkömmlichen Dämmelement aus Polystyrol-Hartschaum (Referenzbeispiel) ein deutlich verbessertes Brandverhalten auf. Aufgrund einer nicht mehr fließfähigen Schmelze oder eines stark verminderten Fließverhaltens bleibt der Brandherd lokal begrenzt. Insbesondere bildet sich kein brennender Polymersee. Bei allen Beispielen kamen die gleichen vorgeschäumten Polystyrol-Partikel zum Einsatz.

## Patentansprüche

1. Verfahren zur Herstellung eines flammgeschützten Dämmelementes, bei welchem vorgeschäumte Polystyrol-Partikel verwendet werden, von denen zumindest ein Teil vor dem Einfüllen in eine Form und dem Versintern beschichtet werden,
**dadurch gekennzeichnet, dass** die vorgeschäumten Polystyrol-Partikel zumindest teilweise mit einer Acrylat, Styrolacrylat, Vinylacetat, Vinylacetat-Ethylen und/oder Vinylchlorid enthaltenden Formulierung als organischem Bindemittel und mit wenigstens einem Flammschutzmittel beschichtet werden, wobei das Bindemittel und das Flammschutzmittel zeitlich versetzt auf die vorgeschäumten Polystyrol-Partikel aufgebracht werden.

2. Verfahren nach Anspruch 1,
**dadurch gekennzeichnet, dass** ein Flammschutzmittel zum Beschichten der vorgeschäumten Polystyrol-Partikel verwendet wird, das im Brandfall eine ablative oder intumeszierende Schutzschicht bildet, und/oder, dass Blähgraphit als Flammschutzmittel verwendet wird.

3. Verfahren nach einem der vorhergehenden Ansprüche,
**dadurch gekennzeichnet, dass** das Bindemittel und das Flammschutzmittel mittels Sprühen, Spritzen, Tauchen und/oder Mischen auf die vorgeschäumten Polystyrol-Partikel aufgebracht werden.

4. Verfahren nach einem der vorhergehenden Ansprüche,
**dadurch gekennzeichnet, dass** die vorgeschäumten und zumindest mit Bindemittel beschichteten Polystyrol-Partikel vor dem vollständigen Trocknen der Beschichtung mit einem Flammschutzmittel beschichtet werden.

5. Verfahren nach einem der vorhergehenden Ansprüche,
**dadurch gekennzeichnet, dass** die vorgeschäumten und mit Bindemittel und Flammschutzmittel beschichteten Polystyrol-Partikel vor dem vollständigen Trocknen der Beschichtung in eine Form eingegeben und versintert werden.

6. Verfahren nach einem der vorhergehenden Ansprüche,
**dadurch gekennzeichnet, dass** den beschichteten vorgeschäumten Polystyrol-Partikeln vor dem Eingeben in eine Form unbeschichtete vorgeschäumte Polystyrol-Partikel beigemischt werden, wobei der Anteil der unbeschichteten vorgeschäumten Polystyrol-Partikel vorzugsweise 0 bis 95 Vol.-%, weiterhin vorzugsweise 25 bis 90 Vol.-% und besonders bevorzugt 50 bis 88 Vol.-% bezogen auf das Gesamtvolumen der vorgeschäumten Polystyrol-Partikel beträgt.

7. Verfahren nach einem der vorhergehenden Ansprüche,
**dadurch gekennzeichnet, dass** 30 bis 95 Gew.-% Polystyrol-Partikel, 2,5 bis 67,5 Gew.-% Bindemittel und 2,5 bis 67,5 Gew.-% Flammschutzmittel, vorzugsweise 40 bis 90 Gew.-% Polystyrol-Partikel, 5 bis 55 Gew.-% Bindemittel und 5 bis 55 Gew.-% Flammschutzmittel, weiterhin vorzugsweise 50 bis 85 Gew.-% Polystyrol-Partikel, 7,5 bis 35 Gew.-% Bindemittel und 7,5 bis 35 Gew.-% Flammschutzmittel, bezogen auf das Trockengesamtgewicht der Ausgangsstoffe verwendet werden.

8. Verfahren nach einem der vorhergenden Ansprüche,
**dadurch gekennzeichnet, dass** bezogen auf das jeweilige Trockengewicht das Gewichtsverhältnis der vorgeschäumten Polystyrol-Partikel zum Flammschutzmittel 0,4 bis 38, vorzugsweise 0,75 bis 34, weiterhin vorzugsweise 1,05 bis 20 beträgt.

9. Verfahren nach einem der vorhergehenden Ansprüche,
**dadurch gekennzeichnet, dass** den vorgeschäumten, beschichteten und/oder unbeschichteten Polystyrol-Partikeln vor dem Eingeben in die Form Fasern, Füllstoffe und/oder Additive zugegeben werden.

10. Verfahren nach einem der vorhergehenden Ansprüche,
**dadurch gekennzeichnet, dass** die Ausgangsstoffe in der Form unter Zugabe von Druck und/oder Wärme versintert werden.

11. Dämmelement, das nach einem der vorhergehenden Verfahren hergestellt worden, wasserundurchlässig und wasserdampfdiffusionsoffen ist.

12. Verwendung eines Dämmelementes, das nach einem der vorhergehenden Verfahren hergestellt worden ist, zur Schall- und/oder Wärmedämmung einer Gebäudewand oder -decke.

## Claims

1. A process for the production of a flame retardant insulating element, in which pre-expanded polystyrene particles are used at least a portion of which are coated prior to pouring into a mould and sintering,
**characterized in that** the pre-expanded polystyrene particles are at least partially coated with a formulation containing acrylate, styrene-acrylate, vinyl acetate, vinyl acetate-ethylene and/or vinyl chloride as an organic binder and with at least one flame retardant, wherein the binder and the flame retardant are applied to the pre-expanded polystyrene particles at different times.

2. The process as claimed in claim 1,
**characterized in that** a flame retardant is used to coat the pre-expanded polystyrene particles which, in the event of fire, forms an ablative or intumescent protective layer, and/or **in that** expandable graphite is used as the flame retardant.

3. The process as claimed in one of the preceding claims,
**characterized in that** the binder and the flame retardant are applied to the pre-expanded polystyrene particles by means of spraying, sputtering, dipping and/or mixing.

4. The process as claimed in one of the preceding claims,
**characterized in that** the pre-expanded polystyrene particles at least coated with the binder are coated with a flame retardant before the coating has dried completely.

5. The process as claimed in one of the preceding claims,
**characterized in that** the polystyrene particles which have been pre-expanded and coated with binder and flame retardant are placed in a mould and sintered before the coating has dried completely.

6. The process as claimed in one of the preceding claims,
**characterized in that** uncoated pre-expanded polystyrene particles are admixed into the coated pre-expanded polystyrene particles prior to placement in a mould, wherein the proportion of uncoated pre-expanded polystyrene particles is preferably 0 to 95% by volume, more preferably 25% to 90% by volume and particularly preferably 50% to 88% by volume with respect to the total volume of the pre-expanded polystyrene particles.

7. The process as claimed in one of the preceding claims,
**characterized in that** 30% to 95% by weight of polystyrene particles, 2.5% to 67.5% by weight of binder and 2.5% to 67.5% by weight of flame retardant, preferably 40% to 90% by weight of polystyrene particles, 5% to 55% by weight of binder and 5% to 55% by weight of flame retardant, more preferably 50% to 85% by weight of polystyrene particles, 7.5% to 35% by weight of binder and 7.5% to 35% by weight of flame retardant are used, with respect to the total dry weight of the starting materials.

8. The process as claimed in one of the preceding claims,
**characterized in that** with respect to the respective dry weight, the ratio by weight of the pre-expanded polystyrene particles to the flame retardant is 0.4 to 38, preferably 0.75 to 34, more preferably 1.05 to 20.

9. The process as claimed in one of the preceding claims,
**characterized in that** fibres, fillers and/or additives are added to the pre-expanded coated and/or uncoated polystyrene particles prior to placement in the mould.

10. The process as claimed in one of the preceding claims,
**characterized in that** the starting materials in the mould are sintered by the addition of pressure and/or heat.

11. An insulating element which has been produced using one of the preceding processes, which is impermeable to water and permeable to diffusing water vapour.

12. Use of an insulating element which has been produced using one of the preceding processes, for sound and/or thermal insulation of a wall or ceiling of a building.

## Revendications

1. Procédé, destiné à fabriquer un élément isolant ignifuge, lors duquel on utilise des particules de polystyrène pré-expansé dont on revêt au moins une partie avant de la verser dans un moule et de la fritter,
**caractérisé en ce qu'**on revêt au moins en partie les particules de polystyrène pré-expansé d'une formule contenant en tant qu'agent liant organique un acrylate, un acrylate de styrène, un acétate de vinyle, un acétate de vinyle éthylène et/ou un chlorure de vinyle, et d'au moins un agent ignifuge, l'agent liant et l'agent ignifuge étant appliqués avec un décalage temporaire sur les particules de polystyrène pré-expansé.

2. Procédé selon la revendication 1,
**caractérisé en ce qu'**on utilise pour revêtir les particules de polystyrène pré-expansé un agent ignifuge, qui en cas d'incendie forme une couche protectrice ablative ou intumescente et/ou **en ce qu'**on utilise du graphite expansé en tant qu'agent ignifuge.

3. Procédé selon l'une quelconque des revendications précédentes,
**caractérisé en ce qu'**on applique l'agent liant et l'agent ignifuge par vaporisation, injection, immersion et/ou mélange sur les particules de polystyrène pré-expansé.

4. Procédé selon l'une quelconque des revendications précédentes,
**caractérisé en ce qu'**avant le séchage complet du revêtement, on revêt d'un agent ignifuge les particules de polystyrène pré-expansées et revêtues au moins de l'agent liant.

5. Procédé selon l'une quelconque des revendications précédentes,
**caractérisé en ce qu'**avant le séchage complet du revêtement, on met dans un moule les particules de polystyrène pré-expansées et revêtues de l'agent liant et de l'agent ignifuge et on les fritte.

6. Procédé selon l'une quelconque des revendications précédentes,
**caractérisé en ce qu'**avant de les mettre dans un moule, on mélange les particules de polystyrène pré-expansé revêtues des particules de polystyrène non revêtues, la part en particules de polystyrène pré-expansé non revêtues s'élevant de préférence à de 0 à 95 % en volume, de manière plus préférentielle à de 25 à 90 % en volume et de manière particulièrement préférentielle à de 50 à 88 % en volume, rapportés au volume total des particules de polystyrène pré-expansé.

7. Procédé selon l'une quelconque des revendications précédentes,
**caractérisé en ce qu'**on met en œuvre de 30 à 95 % en poids de particules de polystyrène, de 2,5 à 67,5 % en poids d'agent liant et de 2,5 à 67,5 % en poids d'agent ignifuge, de préférence de 40 à 90 % en poids de particules de polystyrène, de 5 à 55 % en poids d'agent liant et de 5 à 55 % en poids d'agent ignifuge, de manière plus préférentielle de 50 à 85 % en poids de particules de polystyrène, de 7,5 à 35 % en poids d'agent liant et de 7,5 à 35 % en poids d'agent ignifuge, rapportés au poids total à sec des matières de départ.

8. Procédé selon l'une quelconque des revendications précédentes,
**caractérisé en ce que** rapporté au poids total à sec respectif, le rapport en poids des particules de polystyrène pré-expansé à l'agent ignifuge s'élève à de 0,4 à 38, de préférence à de 0,75 à 34, de manière plus préférentielle à de 1,05 à 20.

9. Procédé selon l'une quelconque des revendications précédentes,
**caractérisé en ce qu'**avant de les introduire dans le moule, on rajoute aux particules de polystyrène pré-expansées, revêtues ou non revêtues des fibres, des agents de charge et/ou des additifs.

10. Procédé selon l'une quelconque des revendications précédentes,
**caractérisé en ce qu'**on fritte les matières de départ dans le moule sous apport de pression et/ou de chaleur.

11. Élément isolant, lequel a été fabriqué selon l'un quelconque des précédents procédés, est imperméable à l'eau et fait preuve d'une bonne diffusion de vapeur.

12. Utilisation d'un élément isolant, lequel a été fabriqué selon l'un quelconque des précédents procédés pour l'isolation phonique et/ou thermique d'un mur de bâtiment.
